# FASCICULE DE BREVET EUROPEEN

(11) **EP 1 527 998 B1**
(45) Date de publication et mention de la délivrance du brevet: **15.03.2006**
(21) Numéro de dépôt: 04292322.7
(22) Date de dépôt: 29.09.2004
(51) Int. Cl.: B64D 39/00

(54) **Procédé et dispositif d'optimisation de la quantité de carburant transféré sur un aéronef, lors d'au moins un transfert de carburant en vol**
Verfahren und Vorrichtung zur Optimierung der Kraftstoffmenge bei Betankungen während des Fluges
Method and device to optimise the fuel quantity to be transferred to an aircraft during in-flight refuelling

(30) Priorité: 20.10.2003 FR 0312232
(43) Date de publication de la demande: 04.05.2005
(73) Titulaire: AIRBUS France, 31060 Toulouse (FR)
(72) Inventeur: Berard, Jérémy, 31150 Fenouillet (FR)
(74) Mandataire: Hauer, Bernard

(56) Documents cités:
- US-A- 4 809 174
- US-A- 5 499 784

## Description

La présente invention concerne un procédé et un dispositif d'optimisation de la quantité de carburant transféré sur un aéronef lors d'au moins un transfert en vol de carburant entre ledit aéronef et un aéronef auxiliaire. Un tel procédé et dispositif est connu de US-A-5,499,784, qui représente l'art antérieur le plus proche.

On sait que les aéronefs modernes disposent d'un système de gestion du vol qui fournit un plan de vol constitué de points de passage (ou points de vol) reliés entre eux. A chaque point de vol, jusqu'à l'aéroport de destination, le système de gestion du vol fournit des prédictions : heure de passage, vitesse, altitude, et carburant restant à bord.

Toutefois, au cours d'un vol, un transfert de carburant (ou ravitaillement) en vol peut faire varier la quantité de carburant à bord (autrement que par la consommation normale de carburant) de l'aéronef :
- soit sous forme d'une diminution du carburant à bord, lors d'un ravitaillement en vol en tant qu'aéronef ravitailleur;
- soit sous forme d'une augmentation du carburant à bord, lors d'un ravitaillement en vol en tant qu'aéronef ravitaillé.

La présente invention a pour objet d'assister l'équipage lors d'un tel transfert ou ravitaillement en vol. Plus précisément, elle a pour objet d'indiquer à l'équipage d'un aéronef participant à un ravitaillement en vol, la quantité de carburant :
- maximale que l'aéronef peut délivrer, tout en gardant assez de carburant pour terminer le vol, s'il s'agit d'un aéronef ravitailleur ; ou
- minimale que l'aéronef doit recevoir, pour pouvoir effectuer sa mission (et réaliser le vol prévu), s'il s'agit d'un aéronef ravitaillé.

De façon usuelle, la quantité de carburant à transférer est définie au sol en préparation de mission. Or, une telle quantité de carburant est bien entendu variable, notamment en fonction des conditions de vol rencontrées par l'aéronef jusqu'au point de ravitaillement. Ainsi, les méthodes usuelles ne sont pas en mesure de proposer une quantité de carburant optimisée et actualisée.

La présente invention a pour objet de remédier à ces inconvénients. Elle concerne un procédé d'optimisation de la quantité de carburant transféré sur un aéronef (c'est-à-dire depuis ou vers cet aéronef) lors d'au moins un transfert en vol de carburant entre ledit aéronef et un aéronef auxiliaire, à au moins un premier point de vol du plan de vol dudit aéronef.

A cet effet, selon l'invention, ledit procédé est remarquable en ce que, au cours du vol de l'aéronef suivant ledit plan de vol :
a) on réalise une prédiction, permettant de déterminer une première quantité correspondant à la quantité de carburant restant à bord de l'aéronef audit premier point de vol,en prenant en compte l'état actuel de l'aéronef et des conditions de vol actuelles ;
b) on réalise une estimation, permettant de déterminer une deuxième quantité correspondant à la quantité de carburant permettant à l'aéronef de voler dudit premier point de vol à un second point de vol ultérieur dudit plan de vol ;
c) on détermine, à partir desdites première et deuxième quantités, une troisième quantité correspondant à la quantité de carburant à transférer audit premier point de vol ; et
d) on présente à au moins un pilote de l'aéronef ladite troisième quantité ainsi déterminée.

Ainsi, grâce à l'invention, on présente au pilote une quantité de carburant à transférer qui est optimisée, puisqu'elle dépend de l'état actuel (vitesse, masse, altitude, ...) de l'aéronef et de conditions de vol actuelles (vent réel, température, ...).

Cette quantité de carburant à présenter peut de plus être actualisée à tout moment. Pour ce faire, selon l'invention, on réalise, au cours du vol de l'aéronef, de façon répétitive, ladite suite d'étapes a) à d) successives, en prenant en compte à chaque fois, à l'étape a), l'état actuel de l'aéronef et les conditions de vol actuelles, c'est-à-dire l'état et les conditions de vol existant au moment de la mise en oeuvre desdites étapes a) à d).

En outre, avantageusement, pour réaliser ladite estimation à l'étape b), on met en oeuvre une prédiction auxiliaire permettant de déterminer une, cinquième quantité correspondant à la quantité de carburant restant à bord de l'aéronef audit second point de vol, en fonction d'une quatrième quantité correspondant à la quantité de carburant disponible à bord de l'aéronef audit premier point de vol, et on modifie de façon itérative, pour ladite prédiction auxiliaire, ladite quatrième quantité jusqu'à obtenir une cinquième quantité de carburant qui est nulle, la quatrième quantité correspondante représentant alors ladite deuxième quantité recherchée (c'est-à-dire la quantité de carburant permettant audit aéronef de voler dudit premier point de vol audit second point de vol).

Dans le cadre de la présente invention, ledit second point de vol peut représenter :
- soit la destination de l'aéronef, c'est-à-dire le dernier point de vol de son plan de vol ;
- soit un point de vol quelconque entre ledit premier point de vol où est réalisé un transfert et le dernier point de vol du plan de vol.

Dans un premier mode de réalisation particulier, ledit aéronef est un aéronef ravitaillé, et ledit aéronef auxiliaire est donc un aéronef ravitailleur.

Dans ce cas, de façon avantageuse, à l'étape c), on compare lesdites première et deuxième quantités, et on détermine ladite troisième quantité correspondant à la quantité de carburant à transférer audit premier point de vol, en fonction de cette comparaison, de telle façon que :
- ladite troisième quantité est nulle, lorsque ladite première quantité est supérieure ou égale à ladite deuxième quantité, c'est-à-dire lorsque suffisamment de carburant est disponible à bord de l'aéronef audit premier point de vol pour qu'il atteigne ledit second point de vol ; et
- ladite troisième quantité est égale à la différence entre ladite deuxième quantité et ladite première quantité, lorsque ladite première quantité est inférieure à ladite deuxième quantité, ladite troisième quantité correspondant alors à la quantité minimale de carburant devant être reçu à bord de l'aéronef audit premier point de vol pour qu'il puisse atteindre ledit second point de vol.

De plus, avantageusement, lors d'une pluralité de transferts de carburant (au cours d'un vol de l'aéronef ravitaillé), on met en oeuvre lesdites étapes a) à d) de manière à déterminer et à présenter, pour chaque point de vol où est réalisé un transfert, la quantité minimale de carburant que l'aéronef doit recevoir pour, atteindre le point de vol suivant où est également réalisé un transfert ou le cas échéant la destination.

Dans un second mode de réalisation particulier, ledit aéronef est un aéronef ravitailleur, et ledit aéronef auxiliaire est donc un aéronef ravitaillé.

Dans ce cas, de façon avantageuse, à l'étape c), on compare lesdites première et deuxième quantités, et on détermine ladite troisième quantité correspondant à la quantité de carburant à transférer audit premier point de vol, en fonction de cette comparaison, de telle façon que :
- ladite troisième quantité est nulle, lorsque ladite deuxième quantité est supérieure à ladite première quantité, c'est-à-dire lorsque l'aéronef ravitailleur ne dispose pas de suffisamment de carburant pour rejoindre ledit second point de vol; et
- ladite troisième quantité est égale à la différence entre ladite première quantité et ladite deuxième quantité, lorsque ladite deuxième quantité est inférieure ou égale à ladite première quantité, ladite troisième quantité correspondant alors à la quantité maximale de carburant susceptible d'être délivrée par l'aéronef (ravitailleur) audit premier point de vol, tout en permettant audit aéronef d'atteindre encore ledit second point de vol.

De plus, avantageusement, lors d'une pluralité de transferts de carburant (au cours d'un vol de l'aéronef ravitailleur), on met en oeuvre lesdites étapes a) à d) de manière à déterminer et à présenter, pour au moins le point de vol où est réalisé un premier transfert, la quantité maximale de carburant que l'aéronef est susceptible de délivrer tout en étant capable d'atteindre la destination, et ceci soit en ignorant les autres transferts, soit en déduisant des quantités de carburant prédéterminées que l'on prévoit de transférer lors desdits autres transferts.

La présente invention concerne également un dispositif d'optimisation de la quantité de carburant transféré sur un aéronef lors d'au moins un transfert en vol de carburant entre ledit aéronef et un aéronef auxiliaire, à un premier point de vol du plan de vol dudit aéronef.

Selon l'invention, ledit dispositif est remarquable en ce qu'il comporte :
- un moyen pour réaliser une prédiction, permettant de déterminer une première quantité correspondant à la quantité de carburant restant à bord de l'aéronef audit premier point de vol, en prenant en compte l'état actuel de l'aéronef et des conditions de vol actuelles ;
- un moyen pour réaliser une estimation, permettant de déterminer une deuxième quantité correspondant à la quantité de carburant permettant à l'aéronef de voler dudit premier point de vol à un second point de vol ultérieur dudit plan de vol ;
- un moyen pour déterminer, à partir desdites première et deuxième quantités, une troisième quantité correspondant à la quantité de carburant à transférer audit premier point de vol ; et
- des moyens d'affichage pour présenter à au moins un pilote de l'aéronef ladite troisième quantité ainsi déterminée.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
La figure 2 montre schématiquement un transfert de carburant entre un aéronef et un aéronef auxiliaire.
Les figures 3 et 4 représentent des graphiques illustrant des plans de vol d'un aéronef, pour lequel on met en oeuvre différents types de ravitaillement.

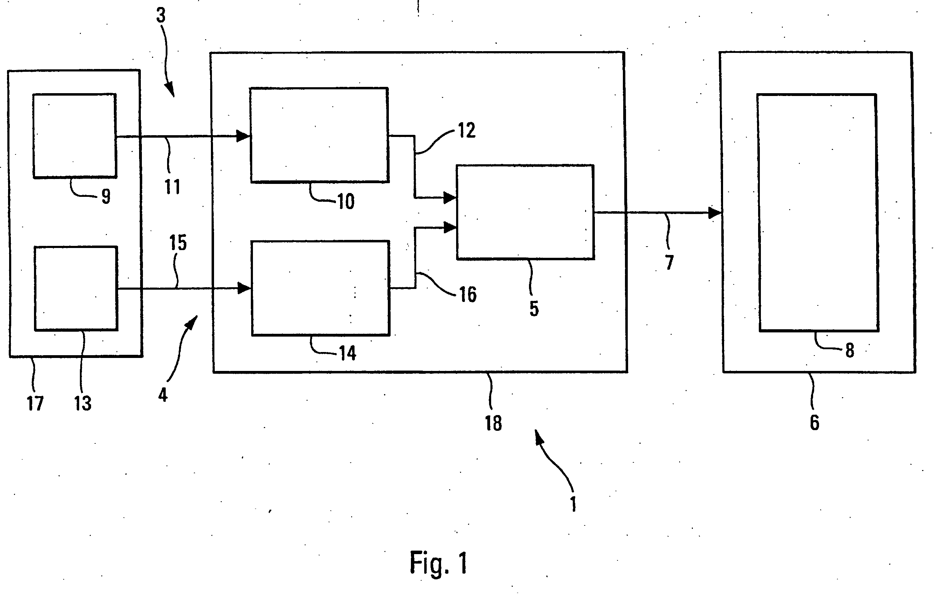

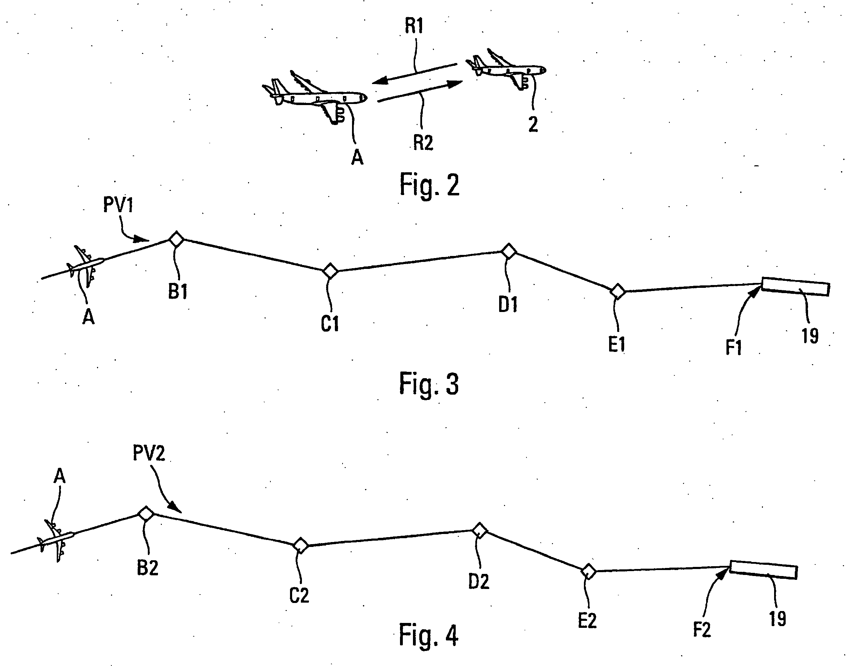

Le dispositif 1 conforme à l'invention et représenté schématiquement sur la figure 1 est destiné à optimiser la quantité (masse, volume, ...) de carburant transféré sur un aéronef A lors d'au moins un transfert en vol de carburant entre ledit aéronef A et un aéronef auxiliaire 2. Comme illustré par des flèches R1 et R2 sur la figure 2 et précisé ci-dessous, dans le cadre de la présente invention, ledit transfert peut être réalisé dans un sens (flèche R1) ou dans l'autre sens (flèche R2) selon que l'aéronef A est un aéronef ravitaillé (flèche R1) ou un aéronef ravitailleur, (flèche R2).

Selon l'invention, ledit dispositif 1 qui est embarqué à bord de l'aéronef A, comporte :
- un moyen 3 précisé ci-dessous, pour réaliser une prédiction permettant de déterminer une première quantité FOB ("Fuel On Board" en anglais, c'est-à-dire "carburant à bord" en français) correspondant à la quantité de carburant disponible (ou restant) à bord de l'aéronef à un premier point de vol P1 du plan de vol PV de l'aéronef A où sera effectué un transfert de carburant, en prenant en compte l'état actuel (masse, altitude, vitesse, ...) de l'aéronef A et les conditions de vol actuelles (vent réel, température, ...) ;
- un moyen 4 précisé ci-dessous, pour réaliser une estimation permettant de déterminer une deuxième quantité Qi correspondant à la quantité de carburant permettant à l'aéronef A de voler dudit premier point de vol P1 à un second point de vol P2 ultérieur dudit plan de vol PV ;
- un moyen 5 pour déterminer, à partir desdites première et deuxième quantités FOB et Qi, une troisième quantité Qf correspondant à la quantité de carburant à transférer audit premier point de vol P1 ; et
- des moyens d'affichage 6 qui sont reliés par une liaison 7 audit moyen 5, pour présenter sur un écran de visualisation 8 qui est par exemple installé dans le poste de pilotage de l'aéronef A, ladite quantité Qf, c'est-à-dire la quantité de carburant à transférer audit premier point de vol P1.

Ledit moyen 3 comporte :
- des moyens d'entrée 9 permettant à un opérateur, par exemple un pilote de l'aéronef A, d'entrer des données relatives à l'aéronef A, à son vol et/ou à son environnement, comme précisé ci-dessous ; et
- un moyen de traitement 10 qui est relié par des liaisons 11 et 12 respectivement auxdits moyens d'entrée 9 et audit moyen 5 et qui met en oeuvre une fonction de prédiction pour réaliser ladite prédiction précitée.

Cette fonction de prédiction, de type usuel, est basée sur des conditions actuelles de l'aéronef A spécifiées ou entrées par l'équipage, la géométrie du plan de vol et des modèles de performance prenant en compte des caractéristiques de l'aéronef A (moteurs, caractéristiques aérodynamiques, performances). Les modèles de performance utilisés pour les prédictions sont élaborés à partir de maquettes en soufflerie et sont corrigés après des essais en vol. Ils reflètent les performances des moteurs, les caractéristiques aérodynamiques de l'aéronef A et ses propres performances. Ces modèles sont stockés sous forme de tables de performance, propres à chaque type d'aéronef A. Ces tables permettent de déterminer, en fonction de paramètres d'entrée telles que la masse de l'aéronef A, l'altitude, ..., les paramètres reflétant les performances dudit aéronef A, qui permettent de calculer les prédictions.

En outre, ledit moyen 4 comporte :
- des moyens d'entrée 13 permettant à un opérateur, par exemple un pilote de l'aéronef A, d'entrer des données précisées ci-dessous et semblables aux données susceptibles- d'être entrées par les moyens d'entrée 9 ; et
- un moyen de traitement 14 qui est relié par des liaisons 15 et 16 respectivement auxdits moyens d'entrée 13 et audit moyen 5 et qui met en oeuvre une fonction d'estimation pour réaliser ladite estimation précitée.

Cette fonction d'estimation permet de déterminer une quantité Q2 correspondant à la quantité de carburant restant à bord de l'aéronef A audit second point de vol P2, en fonction d'une quantité Q1 correspondant à la quantité de carburant disponible à bord de l'aéronef A audit premier point de vol P1, et elle modifie, de façon itérative, ladite quantité Q1 jusqu'à obtenir une quantité Q2 de carburant qui est nulle (déduction faite de marges opérationnelles et réglementaires de l'aéronef A). La quantité Q1 qui est ainsi définie (c'est-à-dire qui correspond à une quantité Q2 nulle) représente ladite deuxième quantité Qi recherchée par le moyen 4.

Pour ce faire, les moyens d'entrée 13 permettent à un opérateur d'entrer dans le moyen de traitement 14, les données d'entrée suivantes :
- le plan de vol PV de l'aéronef A ;
- le niveau de croisière de l'aéronef A, c'est-à-dire l'altitude à laquelle l'aéronef A va effectuer la phase de croisière [par exemple une altitude de 30 000. pieds (ou 10 000 mètres environ) pour un niveau de vol dit "FL 300"] ;
- la masse et le centrage sans carburant de l'aéronef A ; et
- un critère d'optimisation.

Ledit critère d'optimisation définit un rapport (choisi par l'équipage) entre la consommation de carburant de l'aéronef A et le temps de vol correspondant.

Par conséquent, la fonction d'estimation qui est mise en oeuvre par le moyen de traitement 14 et qui est déjà disponible avant le décollage de l'aéronef A, utilise la prédiction précitée de la quantité de carburant restant à l'arrivée. Il s'agit d'embarquer la quantité de carburant qui, selon les prédictions, permettra d'arriver, à destination, avec une quantité de carburant restante à destination nulle (déduction faite de marges opérationnelles et réglementaires). Comme indiqué précédemment, on utilise donc un processus itératif. A cet effet, on propose une quantité initiale Q1. Si les prédictions donnent une quantité restante Q2 à l'arrivée positive, on réduit la quantité initiale Q1 d'une certaine valeur prédéterminée. Sinon, on augmente la quantité initiale Q1 dé la même valeur prédéterminée. On recommence cette opération jusqu'à obtenir un résultat satisfaisant. Le résultat Qi est donc la quantité de carburant initiale Q1 utilisée à la dernière itération.

Par ailleurs, selon l'invention, ledit moyen 5 compare la quantité FOB reçue par le moyen de traitement 10 à la quantité Qi reçue par le moyen de traitement 14 et détermine, en fonction de cette comparaison, la quantité Qf qui est présentée à l'équipage par les moyens d'affichage 6, comme précisé ci-dessous.

Dans un mode de réalisation particulier :
- les moyens d'entrée 9 et 13 qui permettent d'entrer les mêmes données d'entrée sont regroupés dans une seule et même unité d'entrée 17, par exemple de type clavier ou de type souris d'ordinateur, qui peut être associée à un écran, en particulier l'écran de visualisation 8 des moyens d'affichage 6 ; et/ou
- lesdits moyens 5, 10 et 14 sont regroupés dans une unité centrale 18, par exemple, un système de gestion de vol de l'aéronef A.

Dans un premier mode de réalisation, l'aéronef A est un aéronef ravitaillé, par exemple un avion ravitaillé, et l'aéronef 2 est un aéronef ravitailleur usuel.

Comme représenté sur la figure 3 correspondant à ce premier mode de réalisation, le plan de vol PV1 de l'aéronef A comprend une pluralité de points de passage (ou points de vol) B1, C1, D1; E1, F1, dont le dernier représente la destination, à savoir le seuil de la piste d'atterrissage 19 destinée à l'atterrissage de l'aéronef A.

Lorsqu'un seul ravitaillement est prévu au cours du vol, par exemple au point de vol C1, la quantité Qf de carburant à transférer audit point de vol C1 de l'aéronef ravitailleur 2 audit aéronef ravitaillé A, qui est déterminée par le moyen 5 et qui est présentée sur l'écran de visualisation 8:
- est nulle, si FOB ≥ Qi. En effet, dans ce cas, le ravitaillement n'est pas nécessaire. L'aéronef A dispose en effet audit point de vol C1 de suffisamment de carburant (FOB) pour rejoindre sa destination (point de vol F1) ; et
- est égale à la différence entre Qi et FOB (Qf = Qi-FOB), si FOB < Qi. Cette quantité Qi est nécessaire (et suffisante) pour permettre à l'aéronef A de rejoindre sa destination (point de vol F1).

Bien entendu, la mise à jour des prédictions en vol permet d'ajuster la quantité FOB, et donc la quantité Qf, en fonction des conditions courantes rencontrées par l'aéronef (entre le départ et le point courant où est réalisé le calcul et la présentation de Qf, et ceci jusqu'audit point de vol C1).

Dans le cas de ravitaillements multiples dudit aéronef A ravitaillé, par exemple aux points de vol C1 et D1, le dispositif 1 permet de déterminer et d'afficher, en premier lieu, la quantité de carburant Qf(C1) minimale (c'est-à-dire nécessaire, mais suffisante) que l'aéronef A doit recevoir au point de vol C1, où est réalisé le premier ravitaillement, pour rejoindre le point de vol D1, où est réalisé le second ravitaillement. Il peut également déterminer et afficher la quantité de carburant Qf(D1) minimale (c'est-à-dire nécessaire, mais suffisante) que l'aéronef. A doit recevoir audit point de vol D1 pour rejoindre la destination finale F1.

En généralisant, le dispositif 1 permet donc de présenter à l'équipage la quantité minimale Qf de carburant que l'aéronef A doit recevoir (à chaque point de ravitaillement) pour atteindre le prochain point de ravitaillement ou le cas échéant la destination finale F1.

Dans un second mode de réalisation, l'aéronef A est un aéronef ravitailleur usuel (sur lequel le carburant embarqué peut être utilisé pour le ravitaillement ou pour la propre consommation dudit aéronef ravitailleur, les réservoirs pour le ravitaillement et pour la propre consommation n'étant pas séparés) et l'aéronef 2 est un aéronef ravitaillé, par exemple un avion ravitaillé.

Comme représenté sur la figure 4 correspondant à ce second mode de réalisation, le plan de vol PV2 de l'aéronef A comprend une pluralité de points de passage (ou points de vol) B2, C2, D2, E2, F2, dont le dernier représente la destination, à savoir le seuil de la piste d'atterrissage 19.

Lorsqu'un seul ravitaillement est prévu au cours du vol, par exemple au point de vol C2, la quantité Qf de carburant à transférer audit point de vol C2 dudit aéronef ravitailleur A à l'aéronef ravitaillé 2, qui est déterminée par le moyen 5 et qui est présentée sur l'écran de visualisation 8:
- est nulle, si FOB < Qi. En effet, dans ce cas, le ravitaillement n'est pas compatible avec le plan de vol prévu. L'aéronef ravitailleur A dispose en effet audit point de vol C2 uniquement d'une quantité FOB de carburant, c'est-à-dire d'une quantité insuffisante de carburant (une quantité Qi étant nécessaire) pour rejoindre sa destination (point de vol F2) ; et
- est égale à la différence entre Qi et FOB (QF = FOB-Qi), si FOB ≥ Qi. La quantité Qi qui reste encore à bord de l'aéronef A après le transfert est suffisante (et nécessaire) pour permettre à l'aéronef A de rejoindre sa destination (point de vol F2).

Bien entendu, la mise à jour des prédictions en vol permet d'ajuster la quantité FOB, et donc la quantité Qf, en fonction des conditions courantes rencontrées (entre le départ de l'aéronef A et le point courant où est réalisé le calcul et la présentation de Qf, et ceci jusqu'au point de vol C2).

Si on considère que deux ravitaillements réalisés par l'aéronef A ravitailleur sont planifiés en C2 et D2, on peut indiquer à l'équipage la quantité maximale (nécessaire, mais suffisante) que l'aéronef peut délivrer en C2 pour atteindre la destination F2, uniquement en prenant une hypothèse sur la quantité délivrée en D2.

On peut donc proposer à l'équipage de contraindre un ravitaillement à une valeur donnée [par exemple on prévoit de délivrer la quantité Qf(D2) en D2] et optimiser Qf(C2) en C2, en tenant compte de la quantité Qf(D2) fixée.

A défaut de contrainte en D2, on considérera un transfert nul en ce point. Dans ce cas, on présente au point de vol C2 la quantité maximale de carburant délivrable, en gardant juste ce qu'il faut pour rejoindre la destination F2.

En généralisant, on présente à l'équipage la quantité maximale délivrable au premier point de ravitaillement non contraint, en ignorant les points de ravitaillement suivants.

Le dispositif 1 conforme à l'invention permet donc d'indiquer à l'équipage d'un aéronef A participant à un ravitaillement en vol, la quantité de carburant Qf :
- maximale qu'il peut délivrer, tout en gardant assez de carburant pour terminer le vol, s'il s'agit d'un aéronef ravitailleur A (figure 4) ; ou
- minimale qu'il doit embarquer, pour effectuer sa mission, s'il s'agit d'un aéronef ravitaillé A (figure 3).

De plus, cette quantité de carburant Qf présentée est optimisée et actualisée, en fonction des conditions de vol rencontrées par l'aéronef A, jusqu'au point de ravitaillement correspondant.

## Revendications

1. Procédé d'optimisation de la quantité de carburant transféré sur un aéronef (A) lors d'au moins un transfert en vol de carburant entre ledit aéronef (A) et un aéronef auxiliaire (2), à au moins un premier point de vol (C1, C2) du plan de vol (PV1, PV2) dudit aéronef (A),
**caractérisé en ce que**, au cours du vol de l'aéronef (A) suivant ledit plan de vol (PV1, PV2) :
a) on-réalise une prédiction permettant de déterminer une première quantité correspondant à la quantité de carburant restant à bord de l'aéronef (A) audit premier point de vol (C1, C2), en prenant en compte l'état actuel de l'aéronef (A) et des conditions de vol actuelles ;
b) on réalise une estimation permettant de déterminer une deuxième quantité correspondant à la quantité de carburant permettant à l'aéronef (A) de voler dudit premier point de vol (C1, C2) à un second point de vol (D1, F1, D2, F2) ultérieur dudit plan de vol (PV1, PV2) ;
c) on détermine, à partir desdites première et deuxième quantités, une troisième quantité correspondant à la quantité de carburant à transférer audit premier point de vol (C1, C2) ; et
d) on présente à au moins un pilote de l'aéronef (A) ladite troisième quantité ainsi déterminée.

2. Procédé selon la revendication 1,
**caractérisé en ce que** l'on réalise, au cours du vol de l'aéronef (A), de façon répétitive, ladite suite d'étapes a) à d) successives, en prenant en compte à chaque fois l'état actuel de l'aéronef (A) et les conditions de vol actuelles à l'étape a).

3. Procédé selon l'une des revendications 1 et 2,
**caractérisé en ce que**, pour réaliser ladite estimation à l'étape b), on met en oeuvre une prédiction auxiliaire permettant de déterminer une cinquième quantité correspondant à la quantité de carburant restant à bord de l'aéronef audit second point de vol (D1, F1, D2, F2), en fonction d'une quatrième quantité correspondant à la quantité de carburant disponible à bord de l'aéronef audit premier point de vol (C1, C2), et on modifie de façon itérative, pour ladite prédiction auxiliaire, ladite quatrième quantité jusqu'à obtenir une cinquième quantité de carburant qui est nulle, la quatrième quantité correspondante représentant ladite deuxième quantité recherchée.

4. Procédé selon l'une quelconque des revendications 1 à 3,
**caractérisé en ce que** ledit second point de vol (F1, F2) représente la destination de l'aéronef (A).

5. Procédé selon l'une quelconque des revendications 1 à 3,
**caractérisé en ce que** ledit second point de vol (D1, D2) représente un point de vol quelconque entre ledit premier point de vol (C1, C2) où est réalisé un transfert et le dernier point de vol (F1, F2) du plan de vol (PV1, PV2).

6. Procédé selon l'une quelconque des revendications 1 à 5,
**caractérisé en ce que** ledit aéronef (A) est un aéronef ravitaillé et ledit aéronef auxiliaire (2) est un aéronef ravitailleur.

7. Procédé selon la revendication 6,
**caractérisé en ce qu'**à l'étape c), on compare lesdites première et deuxième quantités, et **en ce que** l'on détermine ladite troisième quantité correspondant à la quantité de carburant à transférer audit premier point de vol (C1), en fonction de cette comparaison, de telle façon que :
- ladite troisième quantité est nulle, lorsque ladite première quantité est supérieure ou égale à ladite deuxième quantité ; et
- ladite troisième quantité est égale à la différence entre ladite deuxième quantité et ladite première quantité, lorsque ladite première quantité est inférieure à ladite deuxième quantité, ladite troisième quantité correspondant alors à la quantité minimale de carburant devant être reçu à bord de l'aéronef (A) audit premier point de vol (C1) pour qu'il puisse atteindre ledit second point de vol (D1, F1).

8. Procédé selon l'une des revendications 6 et 7,
**caractérisé en ce que**, lors d'une pluralité de transferts de carburant, on met en oeuvre lesdites étapes a) à d) de manière à déterminer et à, présenter, pour chaque point de vol (C1, D1) où est réalisé un transfert, la quantité minimale de carburant que l'aéronef (A) doit recevoir pour atteindre le point de vol (D1) suivant où est également réalisé un transfert ou le cas échéant la destination (F1).

9. Procédé selon l'une quelconque des revendications 1 à 5,
**caractérisé en ce que** ledit aéronef (A) est un aéronef ravitailleur et ledit aéronef auxiliaire (2) est un aéronef ravitaillé.

10. Procédé selon la revendication 9,
**caractérisé en ce qu'**à l'étape c), on compare lesdites première et deuxième quantités, et **en ce que** l'on détermine ladite troisième quantité correspondant à la quantité de carburant à transférer audit premier point de vol (C2), en fonction de cette comparaison, de telle façon que :
- ladite troisième quantité est nulle, lorsque ladite deuxième quantité est supérieure à ladite première quantité ; et
- ladite troisième quantité est égale à la différence entre ladite première quantité et ladite deuxième quantité, lorsque ladite deuxième quantité est inférieure ou égale à ladite première quantité, ladite troisième quantité correspondant alors à la quantité maximale de carburant susceptible d'être délivrée par l'aéronef (A) audit premier point de vol (C2), tout en permettant audit aéronef (A) d'atteindre encore ledit second point de vol (D2, F2).

11. Procédé selon l'une des revendications 9 et 10,
**caractérisé en ce que**, lors d'une pluralité de transferts de carburant, on met en oeuvre lesdites étapes a) à d) de manière à déterminer et à présenter, pour au moins le point de vol (C2) où est réalisé un premier transfert, la quantité maximale de carburant que l'aéronef (A) est susceptible de délivrer tout en étant capable d'atteindre la destination (F2).

12. Dispositif d'optimisation de la quantité de carburant transféré sur un aéronef (A) lors d'au moins un transfert en vol de carburant entre ledit aéronef (A) et un aéronef auxiliaire (2), à un premier point de vol (C1, C2) du plan de vol (PV1, PV2) dudit aéronef (A),
**caractérisé en ce qu'**il comporte :
- un moyen (3) pour réaliser une prédiction, permettant de déterminer une première quantité correspondant à la quantité de carburant restant à bord de l'aéronef (A) audit premier point de vol (C1, C2), en prenant en compte de l'état actuel de l'aéronef (A) et des conditions de vol actuelles ;
- un moyen (4) pour réaliser une estimation, permettant de déterminer une deuxième quantité correspondant à la quantité de carburant permettant à l'aéronef (A) de voler dudit premier point de vol (C1, C2) à un second point de vol (D1, F1, D2, F2) ultérieur dudit plan de vol (PV1, PV2);
- un moyen (5) pour déterminer, à partir desdites première et deuxième quantités, une troisième quantité correspondant à la quantité de carburant à transférer audit premier point de vol (C1, C2) ; et
- des moyens d'affichage (6) pour présenter à au moins un pilote de l'aéronef (A) ladite troisième quantité ainsi déterminée.

13. Aéronef,
**caractérisé en ce qu'**il comporte un dispositif (1) tel que celui spécifié sous la revendication 12.

14. Aéronef,
**caractérisé en ce qu'**il comporte un dispositif (1) susceptible de mettre en oeuvre le procédé spécifié sous l'une quelconque des revendications 1 à 11.

## Patentansprüche

1. Verfahren zur Optimierung der Kraftstoffmenge, mit der ein Luftfahrzeug (A) bei wenigstens einem Kraftstofftransfer zwischen dem Luftfahrzeug (A) und einem Hilfsflugzeug (2) während des Fluges an wenigstens einem ersten Flugpunkt (C1, C2) des Flugplans (PV1, PV2) des Luftfahrzeuges (A) betankt wird,
**dadurch gekennzeichnet, dass** man im Laufe des Fluges des Luftfahrzeuges (A) entsprechend dem Flugplan (PV1, PV2):
a) eine Vorhersage trifft, die es erlaubt, eine erste Menge zu bestimmen, die der Kraftstoffmenge entspricht, die an dem ersten Flugpunkt (C1, C2) an Bord des Luftfahrzeuges (A) verbleibt, wobei man den aktuellen Zustand des Luftfahrzeuges (A) und aktuelle Flugbedingungen berücksichtigt;
b) eine Schätzung macht, die es erlaubt, eine zweite Menge zu bestimmen, die der Kraftstoffmenge entspricht, die es dem Luftfahrzeug (A) gestattet, von dem ersten Flugpunkt (C1, C2) zu einem späteren zweiten Flugpunkt (D1, F1, D2, F2) des Flugplans (PV1, PV2) zu fliegen;
c) ausgehend von der ersten und der zweiten Menge eine dritte Menge bestimmt, die der Kraftstoffmenge entspricht, die an dem ersten Flugpunkt (C1, C2) zu transferieren ist; und
d) wenigstens einem Piloten des Luftfahrzeuges (A) die so bestimmte dritte Menge präsentiert.

2. Verfahren nach Anspruch 1,
**dadurch gekennzeichnet, dass** man im Laufe des Fluges des Luftfahrzeuges (A) auf wiederholte Weise die Schrittfolge a) bis d) ausführt, wobei man jedes Mal den aktuellen Zustand des Luftfahrzeuges (A) und die aktuellen Flugbedingungen in Schritt a) berücksichtigt.

3. Verfahren nach einem der Ansprüche 1 und 2,
**dadurch gekennzeichnet, dass** man, um in Schritt b) die Schätzung vorzunehmen, in Abhängigkeit von einer vierten Menge, die der Kraftstoffmenge entspricht, die an dem ersten Flugpunkt (C1, C2) an Bord des Luftfahrzeuges zur Verfügung steht, eine zusätzliche Vorhersage trifft, die es erlaubt, eine fünfte Menge zu bestimmen, die der Kraftstoffmenge entspricht, die an dem zweiten Flugpunkt (D1, F1, D2, F2) an Bord des Luftfahrzeuges verbleibt, und man für die zusätzliche Vorhersage die vierte Menge in iterativer Weise ändert, bis man eine fünfte Kraftstoffmenge erhält, die null ist, wobei die entsprechende vierte Menge die gesuchte zweite Menge darstellt.

4. Verfahren nach einem der Ansprüche 1 bis 3,
**dadurch gekennzeichnet, dass** der zweite Flugpunkt (F1, F2) das Ziel des Luftfahrzeuges (A) darstellt.

5. Verfahren nach einem der Ansprüche 1 bis 3,
**dadurch gekennzeichnet, dass** der zweite Flugpunkt (D1, D2) einen beliebigen Flugpunkt zwischen dem ersten Flugpunkt (C1, C2), an dem eine Betankung ausgeführt wird, und dem letzten Flugpunkt (F1, F2) des Flugplans (PV1, PV2) darstellt.

6. Verfahren nach einem der Ansprüche 1 bis 5,
**dadurch gekennzeichnet, dass** das Luftfahrzeug (A) ein zu betankendes Luftfahrzeug und das Hilfsflugzeug (2) ein Tankflugzeug ist.

7. Verfahren nach Anspruch 6,
**dadurch gekennzeichnet, dass** man in Schritt c) die erste und die zweite Menge vergleicht, und dass man in Abhängigkeit von diesem Vergleich die dritte Menge, die der an dem ersten Flugpunkt (C1) zu transferierenden Kraftstoffmenge entspricht, in der Weise bestimmt, dass:
- die dritte Menge null ist, wenn die erste Menge größer oder gleich der zweiten Menge ist ; und
- die dritte Menge gleich der Differenz zwischen der zweiten Menge und der ersten Menge ist, wenn die erste Menge kleiner als die zweite Menge ist, wobei die dritte Menge dann der Mindestmenge an Kraftstoff entspricht, mit der das Luftfahrzeug (A) an dem ersten Flugpunkt (C1) betankt werden muss, damit es den zweiten Flugpunkt (D1, F1) erreichen kann.

8. Verfahren nach einem der Ansprüche 6 und 7,
**dadurch gekennzeichnet, dass** man bei einer Vielzahl von Betankungen die Schritte a) bis d) so ausführt, dass man für jeden Flugpunkt (C1, D1), an dem eine Betankung ausgeführt wird, die Mindestmenge an Kraftstoff bestimmt und präsentiert, mit der das Luftfahrzeug (A) betankt werden muss, um den nächsten Flugpunkt (D1), an dem wieder eine Betankung stattfindet, beziehungsweise das Ziel (F1) zu erreichen.

9. Verfahren nach einem der Ansprüche 1 bis 5,
**dadurch gekennzeichnet, dass** das Luftfahrzeug (A) ein Tankflugzeug und das Hilfsflugzeug (2) ein zu betankendes Luftfahrzeug ist.

10. Verfahren nach Anspruch 9,
**dadurch gekennzeichnet, dass** man in Schritt c) die erste und die zweite Menge vergleicht, und dass man in Abhängigkeit von diesem Vergleich die dritte Menge, die der an dem ersten Flugpunkt (C2) zu transferierenden Kraftstoffmenge entspricht, in der Weise bestimmt, dass:
- die dritte Menge null ist, wenn die zweite Menge größer als die erste Menge ist; und
- die dritte Menge gleich der Differenz zwischen der ersten Menge und der zweiten Menge ist, wenn die zweite Menge kleiner oder gleich der ersten Menge ist, wobei die dritte Menge dann der Höchstmenge an Kraftstoff entspricht, die von dem Luftfahrzeug (A) an dem ersten Flugpunkt (C2) abgegeben werden kann, wobei es dem Luftfahrzeug (A) möglich bleibt, noch den zweiten Flugpunkt (D2, F2) zu erreichen.

11. Verfahren nach einem der Ansprüche 9 und 10,
**dadurch gekennzeichnet, dass** man bei einer Vielzahl von Betankungen die Schritte a) bis d) so ausführt, dass man für wenigstens einen Flugpunkt (C2), an dem eine erste Betankung ausgeführt wird, die Höchstmenge an Kraftstoff bestimmt und präsentiert, die das Luftfahrzeug (A) abgeben kann, wobei es in der Lage bleibt, das Ziel (F2) zu erreichen.

12. Vorrichtung zur Optimierung der Kraftstoffmenge, mit der ein Luftfahrzeug (A) bei wenigstens einem Kraftstofftransfer zwischen dem Luftfahrzeug (A) und einem Hilfsflugzeug (2) während des Fluges an einem ersten Flugpunkt (C1, C2) des Flugplans (PV1, PV2) des Luftfahrzeuges (A) betankt wird,
**dadurch gekennzeichnet, dass** es aufweist:
- ein Mittel (3) zur Durchführung einer Vorhersage, die es erlaubt, eine erste Menge zu bestimmen, die der Kraftstoffmenge entspricht, die an dem ersten Flugpunkt (C1, C2) an Bord des Luftfahrzeuges (A) verbleibt, wobei man den aktuellen Zustand des Luftfahrzeuges (A) und aktuelle Flugbedingungen berücksichtigt;
- ein Mittel (4) zur Durchführung einer Schätzung, die es erlaubt, eine zweite Menge zu bestimmen, die der Kraftstoffmenge entspricht, die es dem Luftfahrzeug (A) gestattet, von dem ersten Flugpunkt (C1, C2) zu einem späteren zweiten Flugpunkt (D1, F1, D2, F2) des Flugplans (PV1, PV2) zu fliegen;
- ein Mittel (5), um ausgehend von der ersten und der zweiten Menge eine dritte Menge zu bestimmen, die der Kraftstoffmenge entspricht, die an dem ersten Flugpunkt (C1, C2) zu transferieren ist; und
- Anzeigemittel (6), um wenigstens einem Piloten des Luftfahrzeuges (A) die so bestimmte dritte Menge zu präsentieren.

13. Luftfahrzeug,
**dadurch gekennzeichnet, dass** es eine Vorrichtung (1) aufweist wie jene, die unter Anspruch 12 spezifiziert wird.

14. Luftfahrzeug,
**dadurch gekennzeichnet, dass** es eine Vorrichtung (1) aufweist, die geeignet ist, das Verfahren auszuführen, das unter einem der Ansprüche 1 bis 11 spezifiziert wird.

## Claims

1. A procedure for optimizing the quantity of fuel transferred on an aircraft (A) during at least one in-flight transfer of fuel between said aircraft (A) and an auxiliary aircraft (2), at at least a first flight point (C1, C2) of the flight plan (PV1, PV2) of said aircraft (A),
wherein, during the flight of the aircraft (A) according to said flight plan (PV1, PV2):
a) a prediction is made to determine a first quantity corresponding to the quantity of fuel remaining on board the aircraft (A) at said first flight point (C1, C2), taking into account the current status of the aircraft (A) and the current flying conditions;
b) an estimation is made to determine a second quantity corresponding to the quantity of fuel enabling the aircraft (A) to fly from said first flight point (C1, C2) to a second flight point (D1, F1, D2, F2) later in said flight plan (PV1, PV2);
c) from said first and second quantities, a third quantity is determined, corresponding to the quantity of fuel to be transferred at said first flight point (C1, C2); and
d) said third quantity, duly determined, is presented to at least one pilot of the aircraft (A).

2. The procedure as claimed in claim 1, wherein said sequence of successive steps a) to d) is performed repetitively during the flight of the aircraft (A), each time taking into account the current status of the aircraft (A) and the current flying conditions in step a).

3. The procedure as claimed in one of claims 1 and 2, wherein, to make said estimation in step b), an auxiliary prediction is applied to determine a fifth quantity corresponding to the quantity of fuel remaining on board the aircraft at said second flight point ((D1, F1, D2, F2), dependent on a fourth quantity corresponding to the quantity of fuel available on board the aircraft at said first flight point (C1, C2), and said fourth quantity is modified iteratively, for said auxiliary prediction, until a fifth quantity of fuel is obtained, which is zero, the fourth corresponding quantity representing said second quantity sought.

4. The procedure as claimed in any one of claims 1 to 3, wherein said second flight point (F1, F2) represents the destination of the aircraft (A).

5. The procedure as claimed in any one of claims 1 to 3, wherein said second flight point (D1, D2) represents any flight point between said first flight point (C1, C2), at which a transfer is made, and the final flight point (F1, F2) in the flight plan (PV1, PV2).

6. The procedure as claimed in any one of claims 1 to 5, wherein said aircraft (A) is a refueled aircraft and said auxiliary aircraft (2) is a refueling aircraft.

7. The procedure as claimed in claim 6, wherein, in step c), said first and second quantities are compared, and wherein said third quantity is determined, corresponding to the quantity of fuel to be transferred at said first flight point (C1), according to this comparison, such that:
- said third quantity is zero when said first quantity is greater than or equal to said second quantity; and
- said third quantity is equal to the difference between said second quantity and said first quantity when said first quantity is less than said second quantity, said third quantity then corresponding to the minimum quantity of fuel needing to be received on board the aircraft (A) at said first flight point (C1) for it to be able to reach said second flight point (D1, F1).

8. The procedure as claimed in one of claims 6 and 7, wherein, in a plurality of fuel transfers, said steps a) to d) are applied to determine and to present, for each flight point (C1, D1) at which a transfer is made, the minimum quantity of fuel that the aircraft (A) must receive to reach the next flight point (D1) at which a transfer is also made or, where appropriate, the destination (F1).

9. The procedure as claimed in any one of claims 1 to 5, wherein said aircraft (A) is a refueling aircraft and said auxiliary aircraft (2) is a refueled aircraft.

10. The procedure as claimed in claim 9, wherein, in step c), said first and second quantities are compared, and wherein said third quantity is determined, corresponding to the quantity of fuel to be transferred at said first flight point (C2), according to this comparison, such that:
- said third quantity is zero when said second quantity is greater than said first quantity; and
- said third quantity is equal to the difference between said first quantity and said second quantity when said second quantity is less than or equal to said first quantity, said third quantity then corresponding to the maximum quantity of fuel that it is possible for the aircraft (A) to deliver at said first flight point (C2), while still enabling said aircraft (A) to reach said second flight point (D2, F2).

11. The procedure as claimed in any one of claims 9 and 10, wherein, in a plurality of fuel transfers, said steps a) to d) are applied to determine and to present, for at least the flight point (C2) at which a first transfer is made, the maximum quantity of fuel that the aircraft (A) is able to deliver while being capable of reaching the destination (F2).

12. A device for optimizing the quantity of fuel transferred on an aircraft (A) during at least one in-flight transfer of fuel between said aircraft (A) and an auxiliary aircraft (2), at a first flight point (C1, C2) of the flight plan (PV1, PV2) of said aircraft (A), which comprises:
- a means (3) for making a prediction to determine a first quantity corresponding to the quantity of fuel remaining on board the aircraft (A) at said first flight point (C1, C2), taking into account the current status of the aircraft (A) and the current flying conditions;
- a means (4) for making an estimation to determine a second quantity corresponding to the quantity of fuel enabling the aircraft (A) to fly from said first flight point (C1, C2) to a second flight point (D1, F1, D2, F2) later in said flight plan (PV1, PV2);
- a means (5) for determining, from said first and second quantities, a third quantity corresponding to the quantity of fuel to be transferred at said first flight point (C1, C2); and
- means of display (6) for presenting said third duly determined quantity to at least one pilot of the aircraft (A).

13. An aircraft, which comprises a device (1) such as that specified in claim 12.

14. An aircraft, which comprises a device (1) able to apply the procedure specified in any one of claims 1 to 11.
